# EUROPEAN PATENT APPLICATION

(11) **EP 4 699 728 A1**
(43) Date of publication of application: **25.02.2026**
(21) Application number: 25745283.9
(22) Date of filing: 21.01.2025
(51) Int. Cl.: B23K 20/10, B23K 20/26, H01M 50/531, B23K 101/36

(54) **ELECTRODE TAB WELDING APPARATUS AND ELECTRODE TAB WELDING METHOD**

(30) Priority: 24.01.2024 KR 20240011262
(71) Applicant: LG Energy Solution, Ltd., Seoul 07335 (KR)
(72) Inventor: PARK, Min Cheol, Daejeon 34122 (KR)
(74) Representative: Goddar, Heinz J.
(86) International application number: PCT/KR2025/099109
(87) International publication number: WO 2025/159618

(57) **Abstract**

According to one example of the present invention, a welding device for welding a plurality of electrode tabs of an electrode assembly is provided, wherein the electrode tab welding device comprises a tab guide part including an upper tab guide block and a lower tab guide block, which are arranged to be movable up and down so that the plurality of electrode tabs is gathered, an air injection part injecting air to gather the plurality of electrode tabs, and a welding part arranged to weld the gathered portion of the plurality of electrode tabs.

## Description

### Technical Field

The present invention relates to an electrode tab welding device and an electrode tab welding method, and more specifically, to an electrode tab welding device and an electrode tab welding method, which prevent damage to a tab guide part gathering electrode tabs, thereby effectively increasing a replacement time of the tab guide part.

This application claims the benefit of priority based on Korean Patent Application No. 10-2024-0011262 dated January 24, 2024, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

In general, depending on the shape of the battery case, the secondary battery is classified into cylindrical battery and rectangular batteries in which an electrode assembly is embedded into a cylindrical or rectangular metal can, and pouch-type batteries in which an electrode assembly is embedded into a pouch-type case of an aluminum laminate sheet, and the electrode assembly embedded into the battery case is a power generation element consisting of a structure of a positive electrode, a negative electrode, and a separator interposed between these positive and negative electrodes to be capable of charging and discharging, which is classified into a jelly-roll type wound by interposing a separator between long sheet-shaped positive and negative electrodes coated with active materials, and, and a stack type in which multiple positive and negative electrodes with a certain size are sequentially laminated in a state where a separator is interposed therebetween.

As a lithium secondary battery, a pouch-type secondary battery in which an electrode assembly is sealed by a pouch, which is an aluminum sealing material, is widely used. The electrode assembly of the pouch-type secondary battery is accommodated in a pouch case, which is a sealing material. The pouch type accommodates the electrode assembly in a pouch manufactured with a flexible polymer material having an irregular shape.

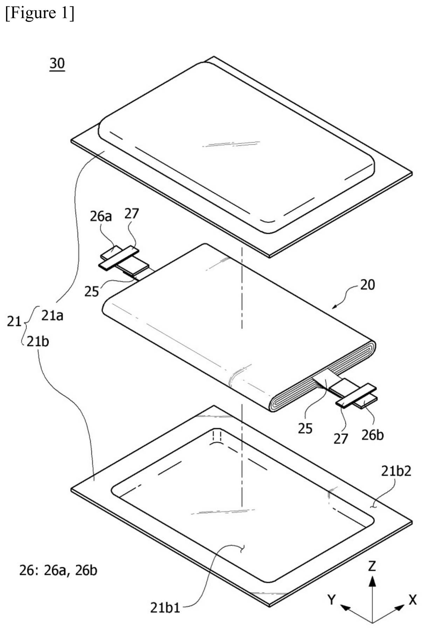

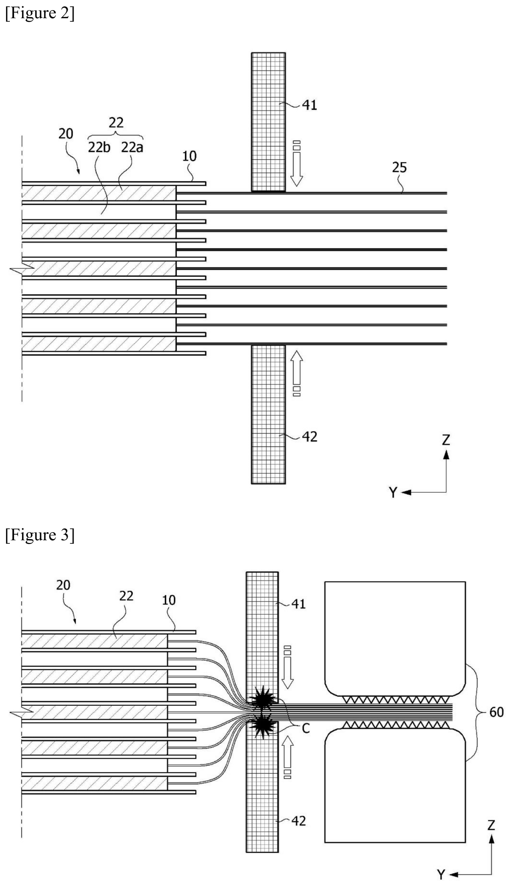

Figure 1 is an exploded perspective diagram schematically showing an appearance of constitutions of a typical pouch-type secondary battery. Then, Figure 2 is a cross-sectional diagram schematically showing an appearance of an electrode assembly of a pouch-type secondary battery in a conventional art. For reference, the electrode assembly of Figure 2 shows the appearance before performing a process of welding ends of a plurality of electrode tabs.

Referring to Figures 1 and 2, the pouch (21), which is a case of a pouch-type secondary battery (30), comprises pouch films (21a, 21b) having a flexible material. The pouch films (21a, 21b) are composed of a plurality of layers, such as an outer covering layer, a metal blocking layer, and an inner adhesive layer. The pouch film (21b) is formed with a cup-shaped accommodation portion (21b1) accommodating the electrode assembly (20).

The pouch-type secondary battery (30) comprises an electrode assembly (20) to be accommodated in the accommodation portion (21b1) of such a pouch (21). The electrode assembly (20) comprises a plurality of electrodes (22) in which electrode active materials are applied to electrode plates, and electrode tabs (25) connected to the respective electrodes (22). The electrodes comprise a positive electrode and a negative electrode. The electrode assembly (20) comprises a separator (10) interposed between such positive electrode (22a) and negative electrode (22b).

The pouch-type secondary battery (30) comprises electrode leads (26). The electrode leads (26) are divided into a positive electrode lead (26a) and a negative electrode lead (26b) according to polarity. The electrode lead (26) is provided with a lead film (27) for electrical insulation of a portion in contact with the pouch (21).

Then, a manufacturing process of the pouch-type secondary battery (30) is composed of a receiving step in which such an electrode assembly (20) is accommodated in an accommodation portion (21b1) formed in a lower pouch film (21b), a preparatory sealing step in which the remaining edge portion except for one side of the pouch is sealed by heat fusion, an injecting step in which an electrolyte is injected in a state where the electrode assembly (20) is accommodated in the accommodation portion (21b1), an activation step in which initial charging and discharging of the battery is performed, and a sealing step in which the edge portions (21b2) of the upper pouch film (21a) and the lower pouch film (21b) are sealed by heat fusion.

Figure 3 is a cross-sectional diagram schematically showing an appearance in which electrode tabs of an electrode assembly of a pouch-type secondary battery in a conventional art are welded.

Referring to Figures 1 to 3, in the manufacturing process of the secondary battery (30), before the electrode lead (26) and the plurality of electrode tabs (25) are welded to each other, pre-welding is performed through a welding part (60) in a state where the ends of the plurality of electrode tabs (25) are gathered to overlap with each other. Therefore, before performing the pre-welding, a process of gathering the ends of the electrode tabs to form a bundle is necessary.

To this end, in the conventional art, the ends of the plurality of electrode tabs (25) could be made into a bundle form by pressurizing the plurality of electrode tabs (25) from both sides using tab guide blocks (41, 42).

However, in the conventional art, when the tab guide blocks (41, 42) pressurized the upper and lower portions of the plurality of electrode tabs (25) of the electrode assembly (20), respectively, the electrode tabs (25) were formed of a metal material, so that impact portions (C) of the tab guide blocks (41, 42) were easily damaged. Accordingly, when the pressurizing process of the tab guide blocks (41, 42) was repeated several times, deformation or damage of the tab guide blocks (41, 42) occurred, thereby requiring replacement. Furthermore, the tab guide blocks (41, 42) generally used plastic materials for electrical insulation with the electrode tabs, and there was a problem that the tab guide blocks (41, 42) made of plastics, which had lower rigidity (hardness) than metal, were damaged more quickly due to collision with the electrode tabs (25), whereby the replacement time was shorten.

To solve this problem, it is necessary to develop a welding device and a welding method which can be applied to the manufacturing process of a secondary battery.

### Disclosure

### Technical Problem

The present invention is intended to solve problems occurring in a conventional pre-welding process of forming a bundle of multiple electrode tabs of an electrode assembly of a secondary battery.

Through one example of the present invention, it is intended to provide an electrode tab welding device, which comprise an air injection part injecting air toward an electrode tab, capable of buffering impact of the electrode tab and a tab guide part by the air pressure of the air injected to the electrode tab, and an electrode tab welding method using the same.

In addition, the present invention is intended to provide an electrode tab welding device capable of easily maintaining ends of a plurality of electrode tabs in a bundle form by air injection, and an electrode tab welding method using the same.

### Technical Solution

In order to solve the above-described problems, according to one example of the present invention, a welding device for welding a plurality of electrode tabs of an electrode assembly is provided, wherein the electrode tab welding device comprises a tab guide part including an upper tab guide block and a lower tab guide block, which are arranged to be movable up and down so that the plurality of electrode tabs is gathered, an air injection part injecting air to gather the plurality of electrode tabs, and a welding part arranged to weld the gathered portion of the plurality of electrode tabs.

Also, the air injection part may be arranged in the tab guide part. In addition, the air injection part may be arranged to be movable together with the tab guide part. As one example, the tab guide part may be moved in a direction close to or away from the plurality of electrode tabs, and the air injection part may be moved in a direction close to or away from the plurality of electrode tabs when the tab guide part moves.

In addition, the air injection part may comprise a lower air injection nozzle mounted on the lower tab guide block, and a first air supply unit connected to the lower air injection nozzle and supplying air.

Furthermore, the lower air injection nozzle may have a first air injection port arranged to inject air toward the lowermost electrode tab among the plurality of electrode tabs.

Also, the lower air injection nozzle may be located at the bottom of the plurality of electrode tabs and arranged to inject air toward the lowest electrode tab.

In addition, the lower air injection nozzle may be arranged to inject air while the lower tab guide block moves (rises) toward the electrode tabs.

Furthermore, the lower air injection nozzle may comprise a first adjustment guide for adjusting the direction of the air discharged through the first air injection port. As one example, the first adjustment guide may be arranged within the lower air injection nozzle. The first adjustment guide may be arranged to be rotatable, and the first adjustment guide may be arranged to be rotatable in forward and reverse directions, respectively, and a driving source such as a first motor may be connected to the rotational axis of the first adjustment guide. At this time, upon operation of the first motor, the first adjustment guide may be rotated and adjust the direction of the air discharged through the first air injection port. As one example, when the lower tab guide block rises, the air may also be injected in a first direction that is approximately parallel to the rising direction of the lower tab guide block, the air may also be injected in a second direction closer to the electrode assembly than the first direction, and the air may also be injected in a third direction away from the electrode assembly, which is a direction opposite to the second direction based on the first direction, by the first adjustment guide. In this document, the direction away from the electrode assembly may mean a direction toward the terminal of the electrode tabs (electrode tab bundle) where ultrasonic welding is to be performed. That is, the direction away from the electrode assembly may mean a direction away from the electrode of the electrode assembly.

Also, the first adjustment guide may be arranged to adjust the direction of the air discharged through the first air injection port while the lower tab guide block moves toward the electrode tab.

In addition, the air injection part may comprise an upper air injection nozzle mounted on the upper tab guide block, and a second air supply unit connected to the upper air injection nozzle and supplying air.

Furthermore, the upper air injection nozzle may have a second air injection port arranged to inject air toward the uppermost electrode tab among the plurality of electrode tabs.

Also, the upper air injection nozzle may be arranged to inject air while the upper tab guide block moves (descends) toward the electrode tab.

In addition, the upper air injection nozzle may comprise a second adjustment guide for adjusting the direction of the air discharged through the second air injection port. As one example, the second adjustment guide may be arranged within the upper air injection nozzle. The second adjustment guide may be arranged to be rotatable, and the second adjustment guide may be provided to be rotatable in forward and reverse directions, respectively, and a driving source such as a second motor may be connected to the rotational axis of the second adjustment guide. At this time, upon operation of the second motor, the second adjustment guide may be rotated and adjust the direction of the air discharged through the second air injection port. As one example, when the upper tab guide block is lowered, the air may also be injected in a fourth direction that is approximately parallel to the lowering direction of the upper tab guide block, the air may also be injected in a fifth direction closer to the electrode assembly than the fourth direction, and the air may also be injected in a sixth direction away from the electrode assembly, which is a direction opposite to the fifth direction based on the fourth direction. In this document, the direction away from the electrode assembly may mean a direction toward the terminal of the electrode tabs (electrode tab bundle) where ultrasonic welding is to be performed. That is, the direction away from the electrode assembly may mean a direction away from the electrode of the electrode assembly.

Furthermore, the second adjustment guide may be arranged to adjust the direction of the air discharged through the second air injection port while the upper tab guide block moves toward the electrode tab.

Also, the electrode tab welding device may comprise a control part for controlling operation of the tab guide part and the air injection part.

In addition, the air injection part may be arranged so that one or more of a flow rate and a discharge direction of air are adjusted.

Furthermore, the control part may control the air injection part so that one or more of a flow rate and a discharge direction of air are adjusted during movement of the tab guide part.

As one example, the control part may control the first air supply unit and the second air supply unit, respectively, to adjust the flow rates of air discharged through the first air injection port and the second air injection port. As one example, the control part may maintain constant flow rates of air discharged through the first air injection port and the second air injection port when the tab guide part moves.

Also, the control part may control the first adjustment guide and the second adjustment guide, respectively, to adjust the injection directions of air discharged through the first air injection port and the second air injection port by controlling. As one example, the control part may adjust the injection directions of air discharged through the first air injection port and the second air injection port when the tab guide part moves, and may rotate the first adjustment guide and the second adjustment guide, respectively, so that the air is injected in a direction away from the electrode assembly during movement of the tab guide part.

In addition, the upper tab guide block and the lower tab guide block may each comprise a curved surface on a pressurizing surface pressurizing the electrode tab.

Furthermore, according to another aspect of the present invention, a welding method for welding a plurality of electrode tabs of an electrode assembly in a bundle form using the electrode tab welding device is provided, wherein the electrode tab welding method comprises an arranging step of disposing the electrode assembly on a mounting stand so that the plurality of electrode tabs is positioned between the upper tab guide block and the lower tab guide block, an injecting step of injecting air toward the electrode tabs through the air injection part during movement of the tab guide part, a pressurizing step in which the upper tab guide block and the lower tab guide block each pressurize the plurality of electrode tabs up and down so that the ends of the plurality of electrode tabs are gathered, and a welding step of welding the gathered ends of the plurality of electrode tabs.

Also, the injecting step may comprise an adjusting step of adjusting one or more of a flow rate and an injection direction of the air injected through the air injection part.

In addition, the adjusting step may be arranged so that the injection direction of the air injected through the air injection part is adjusted to a direction toward the terminal of the plurality of electrode tabs during movement of the tab guide part.

Furthermore, the adjusting step may be arranged so that the air injection direction of the air injected through the air injection part is adjusted to a direction away from the electrode assembly during movement of the tab guide part.

Also, according to one example of the present invention, a welding method for welding a plurality of electrode tabs of an electrode assembly in a bundle form using an electrode tab welding device comprising a tab guide part including an upper tab guide block and a lower tab guide block and a welding part arranged to weld a gathered portion of the plurality of electrode tabs is provided, wherein the electrode tab welding method comprises an arranging step of disposing the electrode assembly on a mounting stand so that the plurality of electrode tabs is positioned between the upper tab guide block and the lower tab guide block, an injecting step in which an air injection part provided in the tab guide part injects air toward the electrode tabs, a pressurizing step in which the upper tab guide block and the lower tab guide block each pressurize the plurality of electrode tabs so that the ends of the plurality of electrode tabs are gathered while the air injection part injects air toward the electrode tabs, and a welding step in which the welding part welds the gathered ends of the plurality of electrode tabs.

The air injection part may inject air toward the lowermost electrode tab among the plurality of electrode tabs through the lower air injection nozzle arranged in the lower tab guide block in the injecting step. The lower air injection nozzle may be arranged to inject air toward the lower surface of the lowermost electrode tab.

In the injecting step, the lower air injection nozzle may inject air toward the bottom of the plurality of electrode tabs through a first air injection port in the shape of a slit formed in the upper portion of the body.

The lower air injection nozzle may inject air so that the air flows between the lowermost electrode tab and the lower tab guide block in the injecting step.

In the pressurizing step, the upper tab guide block and the lower tab guide block may each pressurize the electrode tabs with a pressurizing surface including a curved surface.

The air injection part may inject air toward the uppermost electrode tab among the plurality of electrode tabs through the upper air injection nozzle mounted on the upper tab guide block in the injecting step. The upper air injection nozzle may be arranged to inject air toward the upper surface of the uppermost electrode tab.

In the injecting step, the upper air injection nozzle may inject air toward the upper portion of the plurality of electrode tabs through a second air injection port in the shape of a slit formed at the lower portion of the body.

The upper air injection nozzle may inject air so that the air flows between the uppermost electrode tab and the upper tab guide block through the upper tab guide block in the injecting step.

### Advantageous Effects

As described above, the electrode tab welding device related to one example of the present invention and the electrode tab welding method using the same have the following effects.

To improve the problems in the conventional art, by comprising an air injection part injecting air toward the electrode tabs when the tab guide part moves, it is possible to buffer the shock between the electrode tab and the tab guide part by the air pressure of the air injected to the electrode tabs.

In addition, it can help so that the ends of multiple electrode tabs can easily have a bundle form by air injection, and it can improve the gathered shape of multiple electrode tabs upon welding, as well as it can reduce manufacturing costs by increasing the life of the upper tab guide and lower tab guide blocks.

### Description of Drawings

Figure 1 is an exploded perspective diagram schematically showing an appearance of constitutions of a typical pouch-type secondary battery.
Figure 2 is a cross-sectional diagram schematically showing an appearance of an electrode assembly of a pouch-type secondary battery in a conventional art.
Figure 3 is a cross-sectional diagram schematically showing an appearance in which electrode tabs of an electrode assembly of a pouch-type secondary battery in a conventional art are welded.
Figure 4 is a conceptual diagram conceptually showing constitutions of an electrode tab welding device according to one example of the present invention.
Figures 5 and 6 are front views schematically showing some constitutions of an electrode tab welding device according to one example of the present invention.
Figure 7 is a plan views schematically showing some constitutions of an electrode tab welding device according to one example of the present invention.
Figure 8 is a front view schematically showing some constitutions of an electrode tab welding device according to another example of the present invention.
Figure 9 and a plan view schematically showing some constitutions of an electrode tab welding device according to another example of the present invention.
Figure 10 is a flow chart showing steps of a method of pre-welding electrode tabs using an electrode tab welding device according to one example of the present invention.

### Mode for Invention

Hereinafter, an electrode tab welding device according to one example of the present invention and a welding method using the same will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

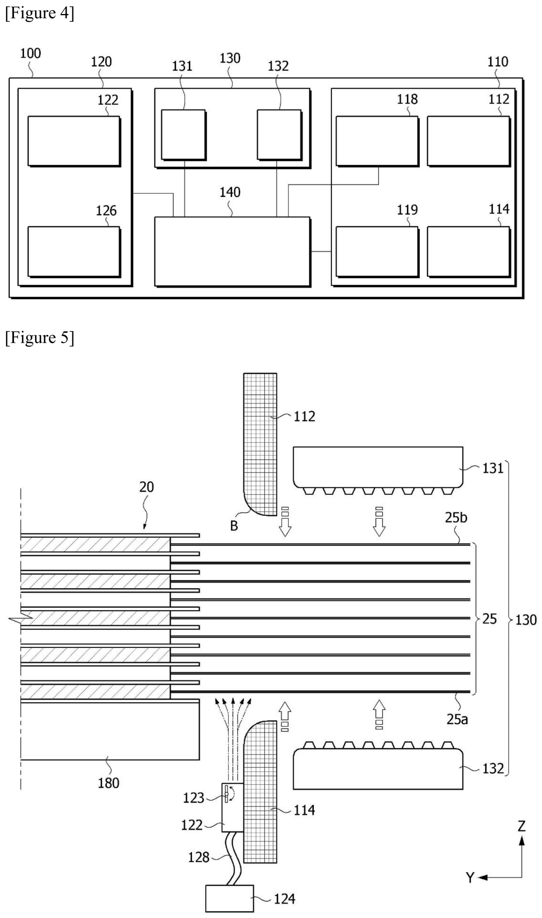

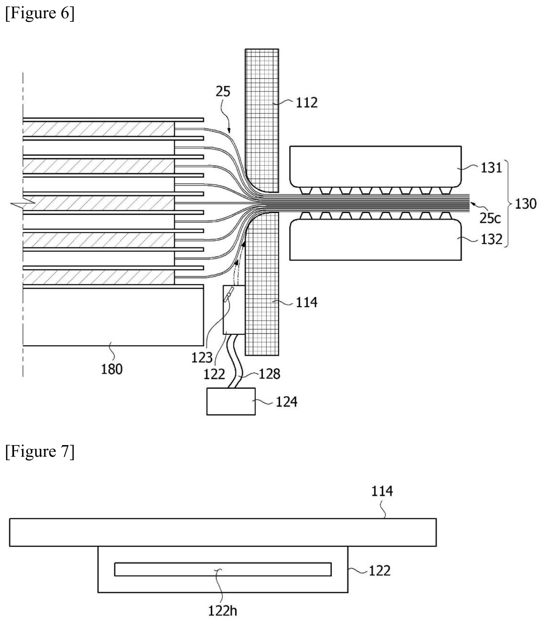

Figure 4 is a conceptual diagram conceptually showing constitutions of an electrode tab welding device (100) according to one example of the present invention. In addition, Figures 5 and 6 are front views schematically showing some constitutions of an electrode tab welding device (100) according to one example of the present invention.

Referring to Figures 4 to 6, the electrode tab welding device (100) according to one example of the present invention is a welding device (100) for pre-welding a plurality of electrode tabs (25) of an electrode assembly (20). In addition, the electrode tab welding device (100) of the present invention comprises a tab guide part (110). The tab guide part (110) is arranged to gather a plurality of electrode tabs (25). The tab guide (110) performs a function of gathering a plurality of electrode tabs (25) to form an electrode tab bundle (25c). To this end, the tab guide part (110) comprises an upper tab guide block (112) and a lower tab guide block (114), arranged to be movable up and down. Upon formation of the electrode tab bundle (25c), the upper tab guide block (112) moves downward, and the lower tab guide block (114) moves upward. In this document, the z-axis may represent the rising/falling direction of the upper tab guide block (112) and the lower tab guide block (114), and the y-axis direction may represent the direction in which the plurality of electrode tabs is extended.

In addition, the tab guide part (110) of the electrode tab welding device (100) of the present invention may comprise an upper moving unit (118) and a lower moving unit (119), arranged to move the upper tab guide block (112) and the lower tab guide block (114), respectively, in the up-and-down direction. The upper moving unit (118) and the lower moving unit (119) may each comprise, for example, a hydraulic piston (not shown) or a servo cylinder (not shown), and the like. However, the application of the moving unit is not necessarily limited to such a constitution, and all moving techniques generally used for moving blocks in a manufacturing process may be applied.

The electrode tab welding device (100) comprises an air injection part (120) injecting air to gather the plurality of electrode tabs (25). The air injection part (120) may be arranged to inject air toward one or more of the uppermost electrode tab (25b) and the lowermost electrode tab (25a) so that the plurality of electrode tabs is gathered.

Also, the electrode tab welding device (100) comprises a welding part (130) arranged to weld the gathered portion (25c, electrode tab bundle) of the plurality of electrode tabs (25).

In addition, the electrode tab welding device (100) of the present invention may comprise a control part (140) controlling operation of the tab guide part (110), the air injection part (120), the upper moving unit (118), the lower moving unit (119), and the welding part (130). For example, the control part (140) may perform on/off control that controls the start and end of air injection of the air injection part (120). For example, the control part (140) may perform welding operation control that controls the start and end of welding of the welding part (130). For example, the control part (140) may control operation of the upper moving unit (118) and the lower moving unit (119) to control the movement of the tab guide part blocks (112, 114) in the up-and-down direction.

Furthermore, the control part (140) may comprise a microprocessor, a programmable logic controller (PLC), a digital signal processor (DSP), or another central control unit (CCU), and the like. The control part (140) may communicate with each component of the welding device (100) to control synchronized movements and operations, and may collect information from sensors to optimize control of the components during operation. The control part (140) may comprise hardware, software, and the like. The control part (140) may be arranged so that a user is smoothly accessible thereto through a user interface (UI), and easily performs operation control.

Also, the electrode tab welding device (100) of the present invention comprises an air injection part (120). The air injection part (120) may be provided on one side of the tab guide part (110). As one example, the air injection part (120) may be mounted on the tab guide part (110). The air injection part (120) may be arranged to inject air toward one or more of the multiple electrode tabs (25).

In addition, the electrode tab welding device (100) of the present invention comprises a welding part (130). The welding part (130) is arranged to weld the gathered portion of the plurality of electrode tabs (25). The welding part (130) may comprise a horn (131) and an anvil (132). The horn (131) and the anvil (132) are constitutions for ultrasonic welding. Here, the ultrasonic welding refers to a process of welding two materials by bringing them into contact with each other and applying energy converted into ultrasonic vibration thereto. The ultrasonic vibration uses a principle in which heat is generated between two materials to be bonded, and the materials are melted and fused due to this heat. The horn (131) performs the role of transmitting ultrasonic vibration to the materials. The horn (131) may comprise a metal material. The anvil (132) performs the role of supporting the materials. The anvil (132) may comprise a metal material. The size of the anvil (132) may be equal to or larger than the size of the horn (131). For example, the horn (131) and the anvil (132) may have surfaces formed with small protrusions.

Furthermore, the welding part (130) may be arranged to ultrasonic-weld the ends of the plurality of electrode tabs (25) gathered by the tab guide part (110) in a state where the horn (131) and the anvil (132) pressurize them. At this time, as the horn (131) transmits ultrasonic waves to the ends of the electrode tabs (25), the bundle (25c) of electrode tabs (25) may be melted and bonded by the generated heat.

The electrode tab welding device (100) of the present invention can buffer the impact between the electrode tab (25) and the lower tab guide block (114) by the air pressure of the air injected to the electrode tab (25) by comprising an air injection part (120) provided in the tab guide part (110) and injecting air toward the electrode tab (25). In addition, the present invention can help so that the ends of the plurality of electrode tabs (25) better have a bundle form by the air injection, thereby improving the gathered shape of the plurality of electrode tabs (25), as well as it can reduce manufacturing costs by increasing the life of the lower tab guide block (114).

Figure 7 is a plan view schematically showing some constitutions of an electrode tab welding device according to one example of the present invention.

Referring to Figures 4 to 6, and 7, the air injection part (120) may comprise a lower air injection nozzle (122). The lower air injection nozzle (122) may be coupled to one side of the lower tab guide block (114). The lower air injection nozzle (122) may be arranged to inject air toward the bottom of the lowermost electrode tab (25a) among the plurality of electrode tabs (25). In the lower air injection nozzle (122), a first air injection port (122h) in the shape of a slit may be formed on the upper portion of the body. At this time, the slit shape may have a form extending long in the width direction of the electrode tab (25).

The electrode tab welding device (100) of the present invention can evenly inject air in the width direction in accordance with the width size of the electrode tab (25) by comprising the lower air injection nozzle (122) in which the first air injection port (122h) in the slit shape is formed, thereby maintaining a shape in which the ends of the plurality of electrode tabs (25) are evenly gathered. In addition, the air can be evenly injected between the lower tab guide block (114) and the lowermost electrode tab (25a), so that it is possible to exert a balanced buffering effect on the collision between the plurality of electrode tabs (25) and the lower tab guide block (114).

Also, the air injection part (120) may comprise a first air supply unit (124). The first air supply unit (124) may be arranged to supply compressed air. The first air supply unit (124) may be connected to the lower air injection nozzle (122) through an air hose (128), and the like. The first air supply unit (124) may be arranged to generate compressed air. For example, the first air supply unit (124) may be a piston-type air compressor, a screw-type air compressor, a disk-type air compressor, or the like. In addition, the first air supply unit (124) may be provided with an air tank storing compressed air.

In addition, the lower air injection nozzle (122) may inject air so that air flows between the lowermost electrode tab (25a) and the lower tab guide block (114) while the lower tab guide block (114) moves toward the plurality of electrode tabs (25). That is, the air injection part (120) may generate a predetermined air pressure between the lower tab guide block (114) and the lowermost electrode tab (25a). Such an air pressure can buffer pressurizing force when the lower tab guide block (114) collides with the lowermost electrode tab (25), thereby effectively preventing damage to the lower tab guide block (114) due to the collision between the electrode tab (25) and the lower tab guide block (114).

Furthermore, the upper tab guide block (112) and the lower tab guide block (114) may each comprise a curved surface (B) on the pressurizing surface that pressurizes the electrode tab (25). Such a curved surface (B) can reduce frictional force between the tab guide block and the electrode tab (25), so that it is possible to effectively reduce damage by pressurization of the tab guide block.

The lower air injection nozzle (122) may comprise a first adjustment guide (123) for adjusting the direction of the air discharged through the first air injection port (122h).

In addition, the first adjustment guide (123) is arranged to adjust the direction of the air discharged through the first air injection port (122h) while the lower tab guide block (114) moves toward the electrode tab.

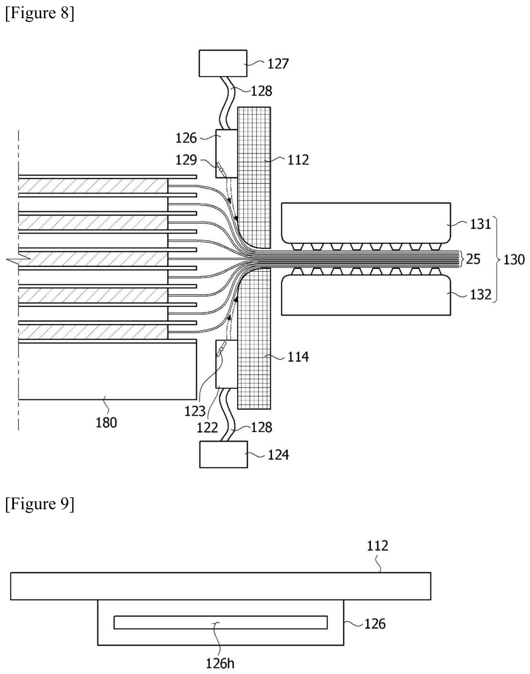

Figure 8 is a front view schematically showing some constitutions of an electrode tab welding device (100) according to another example of the present invention, and Figure 9 is a plan view schematically showing some constitutions of an electrode tab welding device according to another example of the present invention.

In the electrode tab welding device (100) of Figure 8, the remaining constitutions may be similar or identical, except for further comprising an upper air injection nozzle (126) compared to the electrode tab welding device (100) of Figure 5.

Referring to Figures 8 and 9, the air injection part (120) of the electrode tab welding device (100) according to another example of the present invention may comprise an upper air injection nozzle (126). The upper air injection nozzle (126) may be coupled to one side of the upper tab guide block (112). The upper air injection nozzle (126) may be arranged to inject air toward the upper portion of the uppermost electrode tab (25b) of the plurality of electrode tabs (25). In addition, the air injection part (120) may comprise a second air supply unit (127) connected to the upper air injection nozzle (126) and supplying air. The second air supply unit (127) may be arranged to supply compressed air. The second air supply unit (127) may be connected to the upper air injection nozzle (126) through an air hose (128), and the like. The second air supply unit (127) may be arranged to generate compressed air. For example, the second air supply unit (127) may be a piston-type air compressor, a screw-type air compressor, a disc-type air compressor, or the like. In addition, the second air supply unit (127) may be provided with an air tank storing compressed air.

The air injection part (120) may also comprise two air supply units (124, 128) that independently supply air to the lower air injection nozzle (122) and the upper air injection nozzle (126), and may also be arranged to simultaneously supply air to the lower air injection nozzle (122) and the upper air injection nozzle (126) with a single air supply unit.

In addition, the upper air injection nozzle (126) may be formed with a second air injection port (126h) in the shape of a slit for injecting air toward the plurality of electrode tabs (25) at the lower portion of the body. The slit shape may have a form extending long in the width direction of the electrode tab (25).

The electrode tab welding device (100) of the present invention can evenly inject air in the width direction in accordance with the width size of the electrode tab (25) by comprising the upper air injection nozzle (126) in which the second air injection port (126h) in the slit shape is formed, thereby maintaining a shape in which the ends of the plurality of electrode tabs (25) is appropriately gathered. In addition, the air can be evenly injected between the upper tab guide block (112) and the uppermost electrode tab (25b), so that it is possible to exert a balanced buffering effect on the collision between the plurality of electrode tabs (25) and the upper tab guide block (112).

In addition, the upper air injection nozzle (126) may inject air so that the air flows between the uppermost electrode tab (25b) among the plurality of electrode tabs (25) and the upper tab guide block (112) while the upper tab guide block (112) moves (descends) toward the plurality of electrode tabs (25). That is, the air injection part (120) may generate a predetermined air pressure between the upper tab guide block (112) and the uppermost electrode tab (25b). Such an air pressure can buffer pressurizing force when the upper tab guide block (112) collides with the electrode tab (25), thereby effectively preventing damage to the upper tab guide block (112).

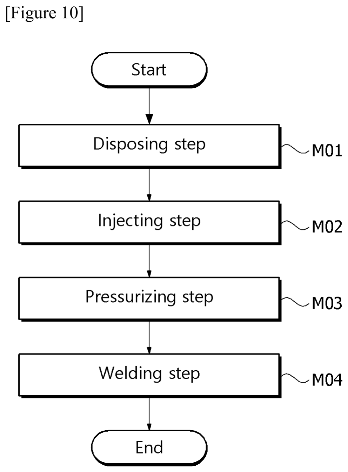

Figure 10 is a flowchart showing steps of a method of pre-welding electrode tabs (25) using an electrode tab welding device (100) according to one example of the present invention.

Referring to Figures 3 to 9, and 10, the present invention provides a welding method for welding a plurality of electrode tabs (25) of an electrode assembly (20) in a bundle form using an electrode tab welding device (100).

Specifically, the welding method of the present invention uses the above-described electrode tab welding device (100). The electrode tab welding device (100) comprises a tab guide part (110) including an upper tab guide block (112) and a lower tab guide block (114). The electrode tab welding device (100) comprises a welding part (130) arranged to weld the gathered portion of the plurality of electrode tabs (25).

Also, the welding method comprises a disposing step (M01). The disposing step (M01) is a step of placing the electrode assembly (20) on a mounting stand (180) so that a plurality of electrode tabs (25) is positioned between the upper tab guide block (112) and the lower tab guide block (114). At this time, the ends of the plurality of electrode tabs (25) may be disposed between the horn (131) and the anvil (132) of the welding part (130).

In addition, the welding method comprises an injecting step (M02). The injecting step (M02) may be arranged so that the air injection part (120) injecting air injects air toward the electrode tabs (25). The air injection part (120) may be provided in a form that is coupled to the tab guide part (110). In this instance, the injected air serves to buffer the collision between the tab guide part (110) and the electrode tabs (25).

Furthermore, the welding method comprises a pressurizing step (M03). The pressurizing step (M03) is a step in which the upper tab guide block (112) and the lower tab guide block (114) each pressurize the plurality of electrode tabs (25) so that the ends of the plurality of electrode tabs (25) are gathered while the air injection part (120) injects air toward the electrode tabs (25). That is, the upper tab guide block (112) located at the upper portion of the plurality of electrode tabs (25) may move downward toward the electrode tabs (25). The lower tab guide block (114) located at the lower portion of the plurality of electrode tabs (25) may move upward toward the electrode tabs (25). In the pressurizing step (M03), while the air injection part (120) injects air toward the electrode tabs (25), the upper tab guide block (112) and the lower tab guide block (114) may each pressurize the plurality of electrode tabs (25).

In addition, the welding method comprises a welding step (M04). The welding step (M04) may be a step in which the welding part (130) welds the gathered ends of the plurality of electrode tabs (25). For example, in the welding step (M04), the welding part (130) may perform ultrasonic welding.

Therefore, the welding method of the electrode tab related to one example of the present invention comprises an injecting step (M02) in which the air injection part (120) provided in the tab guide part (110) injects air toward the electrode tab (25), whereby it is possible to buffer the impact between the electrode tab (25) and the tab guide part (110) by the air pressure of the air injected to the electrode tab (25). In addition, the present invention can help so that the ends of the plurality of electrode tabs (25) better have a bundle form according to the air injection, thereby improving the gathered shape of the plurality of electrode tabs (25), and thus effectively increasing the weldability of the bundle of electrode tabs (25), as well as it can reduce the manufacturing cost by increasing the life of the tab guide part (110).

Also, the air injection part (120) may be arranged to inject air toward the lower portion of the plurality of electrode tabs (25) through the lower air injection nozzle (122) coupled to one side of the lower tab guide block (114) in the injecting step (M02).

In addition, in the injecting step (M02), the lower air injection nozzle (122) may inject air to the lower portion of the plurality of electrode tabs (25) through the first air injection port (122h) in the shape of a slit formed at the upper portion of the body.

Furthermore, the lower air injection nozzle (122) may inject air so that the air flows between the electrode tabs (25) and the lower tab guide block (114) in the injecting step (M02).

Also, in the pressurizing step (M03), the upper tab guide block (112) and the lower tab guide block (114) may each pressurize the electrode tabs (25) with a pressurizing surface including a curved surface (B).

In addition, the air injection part (120) may inject air toward the upper portion of the plurality of electrode tabs (25) through the upper air injection nozzle (126) coupled to one side of the upper tab guide block (112) in the injecting step (M02).

Furthermore, in the injecting step (M02), the upper air injection nozzle (126) may inject air to the upper portion of the plurality of electrode tabs (25) through the second air injection port (126h) in the shape of a slit formed at the lower portion of the body.

Also, the upper air injection nozzle (126) may inject air so that the air flows between the uppermost electrode tab (25b) among the plurality of electrode tabs (25) and the upper tab guide block (112) through the upper tab guide block (112) in the injecting step (M02).

In addition, the injecting step may comprise an adjusting step for adjusting one or more of the flow rate and the injection direction of the air injected through the air injection part (120).

Furthermore, the adjusting step may be arranged so that the injection direction of the air injected through the air injection part (120) is adjusted to a direction away from the electrode assembly during movement of the tab guide part (110). In this document, the direction away from the electrode assembly may mean a direction toward the terminal of the electrode tabs (electrode tab bundle) where ultrasonic welding is to be performed. That is, the direction away from the electrode assembly may mean a direction away from the electrode of the electrode assembly.

As one example, referring to Figure 5, when the lower tab guide block (114) starts to rise, the air may also be injected in a first direction that is approximately parallel to the rising direction (z-axis direction) of the lower tab guide block (114) by the first adjustment guide (123). In addition, referring to Figures 6 and 8, when the lower tab guide block (114) is in contact with the lowermost electrode tab (25a), the air may also be injected in a third direction away from the electrode assembly, as the first adjustment guide (123) rotates. The third direction may be a direction toward the contact point between the lower tab guide block (114) and the lowermost electrode tab (25a).

Likewise, when the upper tab guide block (112) starts to descend, the air may also be injected in a fourth direction (z-axis direction) that is approximately parallel to the descending direction of the upper tab guide block (112) by the second adjustment guide (129). In addition, referring to Figure 8, when the upper tab guide block (112) is in contact with the uppermost electrode tab (25b), the air may also be injected in a sixth direction away from the electrode assembly, as the second adjustment guide (129) rotates. The sixth direction may be a direction toward the contact point between the upper tab guide block (112) and the uppermost electrode tab (25b).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to an electrode tab welding device related to one example of the present invention and an electrode tab welding method using the same, it is possible to buffer the shock between the electrode tab and the tab guide part by the air pressure of the air injected to the electrode tabs.

## Claims

1. A welding device for welding a plurality of electrode tabs of an electrode assembly, wherein the electrode tab welding device comprises:
a tab guide part including an upper tab guide block and a lower tab guide block, which are arranged to be movable up and down so that the plurality of electrode tabs is gathered;
an air injection part injecting air to gather the plurality of electrode tabs: and
a welding part arranged to weld the gathered portion of the plurality of electrode tabs.

2. The electrode tab welding device according to claim 1, **characterized in that**
the air injection part comprises a lower air injection nozzle mounted on the lower tab guide block, and a first air supply unit connected to the lower air injection nozzle and supplying air.

3. The electrode tab welding device according to claim 2, **characterized in that**
the lower air injection nozzle has a first air injection port arranged to inject air toward the lowermost electrode tab among the plurality of electrode tabs.

4. The electrode tab welding device according to claim 2, **characterized in that**
the lower air injection nozzle is arranged to inject air while the lower tab guide block moves toward the electrode tabs.

5. The electrode tab welding device according to claim 3, wherein
the lower air injection nozzle comprises a first adjustment guide for adjusting the direction of the air discharged through the first air injection port.

6. The electrode tab welding device according to claim 5, wherein
the first adjustment guide is arranged to adjust the direction of the air discharged through the first air injection port while the lower tab guide block moves toward the electrode tab.

7. The electrode tab welding device according to claim 1, **characterized in that**
the air injection part comprises an upper air injection nozzle mounted on the upper tab guide block, and a second air supply unit connected to the upper air injection nozzle and supplying air.

8. The electrode tab welding device according to claim 7, **characterized in that**
the upper air injection nozzle has a second air injection port arranged to inject air toward the uppermost electrode tab among the plurality of electrode tabs.

9. The electrode tab welding device according to claim 7, **characterized in that**
the upper air injection nozzle is arranged to inject air while the upper tab guide block moves toward the electrode tab.

10. The electrode tab welding device according to claim 8, wherein
the upper air injection nozzle comprises a second adjustment guide for adjusting the direction of the air discharged through the second air injection port.

11. The electrode tab welding device according to claim 10, wherein
the second adjustment guide is arranged to adjust the direction of the air discharged through the second air injection port while the upper tab guide block moves toward the electrode tab.

12. The electrode tab welding device according to claim 1, further comprising
a control part for controlling operation of the tab guide part and the air injection part, wherein
the air injection part is arranged so that one or more of a flow rate and a discharge direction of air are adjusted, and
the control part controls the air injection part so that one or more of a flow rate and a discharge direction of air are adjusted during movement of the tab guide part.

13. A welding method for welding a plurality of electrode tabs of an electrode assembly in a bundle form using the electrode tab welding device according to claim 1, wherein the electrode tab welding method is **characterized by** comprising:
an arranging step of disposing the electrode assembly on a mounting stand so that the plurality of electrode tabs is positioned between the upper tab guide block and the lower tab guide block;
an injecting step of injecting air toward the electrode tabs through the air injection part during movement of the tab guide part;
a pressurizing step in which the upper tab guide block and the lower tab guide block each pressurize the plurality of electrode tabs up and down so that the ends of the plurality of electrode tabs are gathered; and
a welding step of welding the gathered ends of the plurality of electrode tabs.

14. The electrode tab welding method according to claim 13, wherein
the injecting step comprises an adjusting step of adjusting one or more of a flow rate and an injection direction of the air injected through the air injection part.

15. The electrode tab welding method according to claim 14, wherein
the adjusting step is arranged so that the injection direction of the air injected through the air injection part is adjusted to a direction toward the terminal of the plurality of electrode tabs during movement of the tab guide part.
